# EUROPEAN PATENT SPECIFICATION

(11) **EP 2 690 541 B1**
(45) Date of publication and mention of the grant of the patent: **19.09.2018**
(21) Application number: 13162916.4
(22) Date of filing: 09.04.2013
(51) Int. Cl.: G06F 3/0485, G06F 3/0488

(54) **Method of displaying status bar**
Verfahren zur Anzeige der Statusleiste
Procédé d'affichage de barre d'état

(30) Priority: 24.07.2012 KR 20120080427
(43) Date of publication of application: 29.01.2014
(73) Proprietor: Humax Co., Ltd., Bundang-gu Seongnam-si, Gyeonggi-do 463-050 (KR)
(72) Inventor: Yoo, Youngjoe, Seongnam-si, Gyeonggi-do 463-825 (KR)
(74) Representative: Zardi, Marco

(56) References cited:
- EP-A1- 1 942 401
- EP-A1- 2 161 722
- US-A1- 2002 063 737

## Description

The present invention relates to a method of displaying a status bar in a contents playback device, and more particularly, to a method of displaying a status bar so that a played position of contents may be precisely adjusted.

In various types of electronic devices playing contents of a moving picture file such as movies or an audio file such as music, a status bar (a progressive bar or a play bar) is displayed so that a user may confirm a played status of the contents included in the moving picture file or the audio file and select a desired playback position.

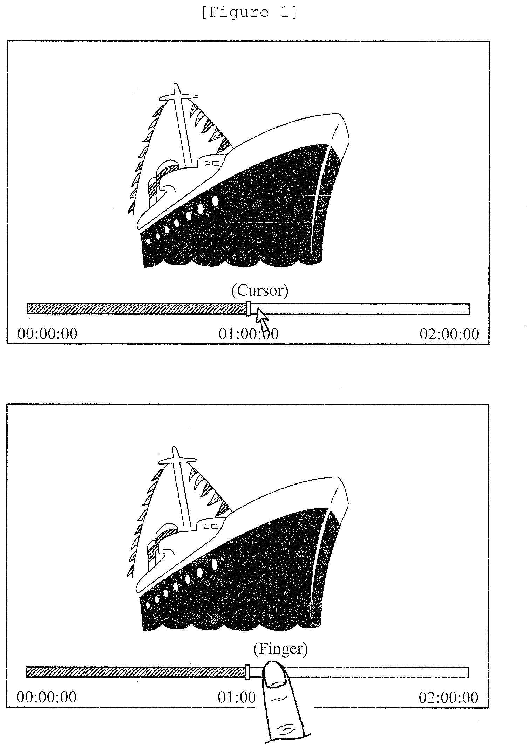

For example, as shown in FIG. 1, while playing the moving picture file, a status bar for representing a currently played state may be displayed at a specific region (e.g., bottom end) of a window including ae moving picture screen to have a bar shape.

Further, for example, a start time (e.g., 00:00:00) and an end time (e.g., 02:00:00) of a moving picture may be displayed at the status bar. In addition, at least one of a marker representing a currently played position and a played time (e.g., 01:00:00) may be displayed at the status bar that allows the user to easily know a played state of contents.

Moreover, as illustrated in FIG. 1, the user may play the contents from a desired position by moving a cursor in a screen through an input device such as a mouse to select a predetermined position of the status bar.

Further, for example, when the contents are played through a playback device such as a smart phone or a Portable Media Player (PMP) including a touch screen including a combination structure of a display and an input device, as illustrated in FIG. 1, the user may move the status bar to a desired position of the contents by touching a predetermined position of the status bar using a finger or a stylus pen.

However, as described above, an overall length of the status bar displayed on the screen is determined according to the size of a display window, and there is a limitation on precision of a position which can be optionally selected by the user.

That is, if the size of a display screen is small, an overall length of the status bar becomes short. Accordingly, since a value of a minimum unit which the user may designate by a cursor or a finger is increased, the user may not minutely designate a desired specific position.

US 2002/0063737 discloses a Zoom-capable scrollbar, according to which, when a cursor is on the scrollbar, an overlay is opened which is a zoomed version of the scrollbar. The zoom range of the overlay is adjustable. Further, when operating the overlay, a menu is available which allows the user to choose between zooming up or down to select the desired position.

Accordingly, one object of the present invention is to address the above-noted and other drawbacks of the related art. The invention is defined by the independent claims. Further aspects of the invention are outlined in the dependent claims. Embodiments which do not fall within the scope of the claims do not describe part of the present invention.

Another object of the present invention is to provide a method of allowing a user to minutely designate a desired specific position at played contents.

To accomplish the objects of the present invention, according to an aspect of the present invention, there is provided a method of displaying a status bar, the method including: displaying a status bar indicating a played state of contents; and enlarging a section including a selected position and displaying the enlarged section at a position separated from the status bar when a predetermined position is selected from the status bar.

To accomplish the objects of the present invention, according to another aspect of the present invention, there is provided a contents playback device including: an input unit for receiving a command of a user; a player for playing contents; a graphic generator for generating a graphic including a status bar indicating a played position of the contents played by the player; and a controller configured to control the graphic generator to enlarge a section including a selected position and to display the enlarged section at a position separated from the status bar when a predetermined position is selected from the status bar through the input unit.

The displaying of the enlarged section may include enlarging a front section and a rear section spaced from the selected position by a predetermined interval to display the enlarged front/rear section in a combined manner.

The displaying of the enlarged section may include enlarging and displaying a section where a rear section of the selected position is set to be longer than a front section of the selected position.

The method may further include enlarging a second section including a second position to display the enlarged second section at a position separated from the status bar and the enlarged section when the second position is selected from the displayed enlarged section.

The displaying of the enlarged section may include enlarging a section between two simultaneously selected positions and displaying the enlarged section at a position separated from the status bar when the two positions are simultaneously selected from the status bar.

The displaying of the enlarged section may include displaying a message selecting enlarging and displaying or repeatedly playing a section between two simultaneously selected positions when the two positions are simultaneously selected from the status bar.

The displaying of the enlarged section may include displaying at least one of a start time, an end time, and a marker representing a currently played position of the section.

The displaying of the enlarged section may include displaying a currently played position at the enlarge section and the status bar.

The predetermined position may be selected from the status bar when a key corresponding to enlarge of the section is input or a touch continues at the predetermined position of the status bar for a predetermined time.

The displaying of the enlarged section may include enlarging the section proportional to a distance to a terminated position of a drag from the status bar and displaying the enlarged section when a touch is dragged from the predetermined position of the status bar in a direction other than an advance direction of the status bar in the predetermined position of the status bar.

The displaying of the enlarged section may include displaying the enlarged section having a straight bar shape, a circular bar shape, or a polygonal bar shape.

According to another embodiment of the present invention, there is provided a method of displaying a status bar including: generating a status bar indicating a played state of contents to display the generated status bar on a display screen; partially enlarging a front section and a rear section of a cursor position or a touched position of a user displayed on the status bar; and continuously displaying the partially enlarged sections without disconnection from the status bar not to overlay with the status bar.

Therefore, a user can minutely designate a position to be played. Since a partially enlarged section does not overlap with other sections, the user can easily select other sections in a state that the section is partially enlarged.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram illustrating a general status bar;
FIG. 2 is a block diagram illustrating a configuration of a set-top box according to the present invention;
FIG. 3 is a diagram illustrating a remote controller according to the present invention;
FIG. 4 is a flowchart illustrating a method of displaying a status bar according to an embodiment of the present invention;
FIGS. 5 and 6 are diagrams illustrating a partially enlarged partial section of a status bar according to an embodiment of the present invention;
FIG. 7 shows that a partially enlarged section is enlarged and displayed again according to an embodiment of the present invention.
FIG. 8 is a flowchart illustrating a method of displaying a status bar according to another embodiment of the present invention;
FIG. 9 are a diagram illustrating a partially enlarged partial section of a status bar according to another embodiment of the present invention;
FIG. 10 is a diagram illustrating various shapes of the partially enlarged partial section of a status bar according to an embodiment of the present invention.

Reference will now be made in detail to the preferred embodiments of the present invention, examples of which are illustrated in the accompanying drawings.

Hereinafter, a method of displaying a status bar according to the preferred embodiment of the present invention will be described with reference to the accompanying drawings.

The method of displaying a status bar according the present invention is applicable to a contents playback device, for example, a smart TV, a set-top box (STB), a smart phone, a PMP, an electronic note, an e-book, a notebook computer, and a smart pad which may display a played state of contents such as a total time duration and a current position through an internal screen or an external screen.

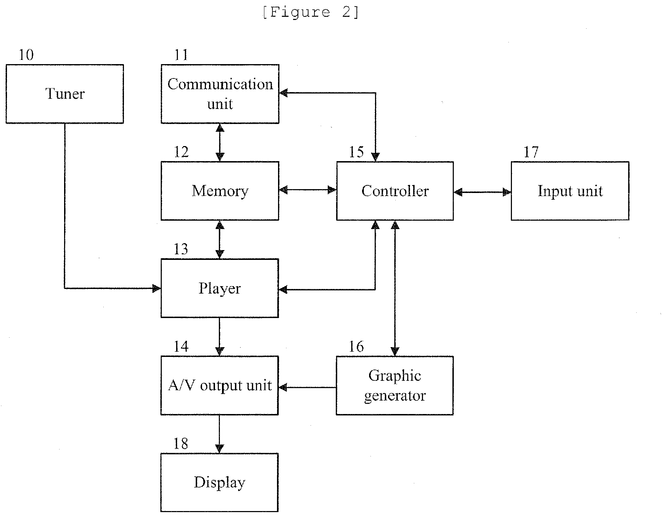

For example, as shown in FIG. 2, the STB to which the method of displaying a status bar according to the present invention is applied may include a tuner 10, a communication unit 11, a memory 12, a player 13, an A/V output unit 14, a controller 15, a graphic generator 16, and an input unit 17. The player 13 and the A/V output unit 14 may be configured as one unit.

Further, for example, video and audio signals from the A/V output unit 14 are output through an external display 18 and a speaker (not shown) such as a television TV as an image and a speech. A graphic including a status bar generated from the graphic generator 16 may be displayed at a specific region (e.g., bottom end) of an image displayed on the display 18.

The controller 15 controls the tuner 10 to receive digital broadcasting or controls the communication unit 11 to receive moving picture data from an Internet server and store the moving picture data temporarily or in the form of a file according to a remote controller key value received from the input unit 17. The controller 15 controls the player 13 to play the moving picture data stored in the memory 12 and controls the graphic generator 16 to generate a status bar indicating a played state of a played moving picture, thereby displaying the status bar at a part of a moving picture screen, for example, a bottom end of a screen.

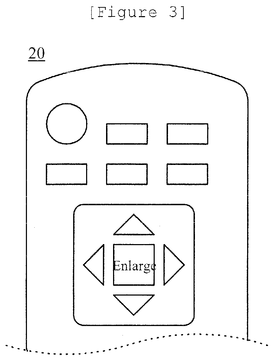

Further, as shown in FIG. 3, when a specific key, for example, an enlarge key is input by the user, the controller 150 displays the status bar on the moving picture screen while enlarging and displaying a partial section of the status bar which is continuously connected to the status bar without disconnection, and is separated from the status bar not to overlap with the status bar so that the user may minutely select a desired position. The enlarge key may include a key button separately from the remote controller or one functionally allocated key button of a plurality of key buttons may be used as an enlarge key button.

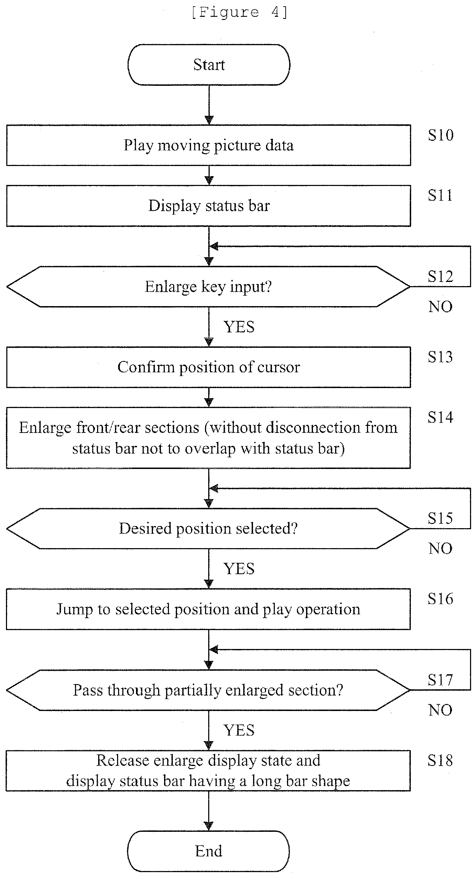

FIG. 4 is a flowchart illustrating a method of displaying a status bar according to an embodiment of the present invention.

The controller 15 controls the player 13 to perform a series of playback operations which play moving picture data stored in a storing medium 12 (S10).

Further, the controller 15 controls the graphic generator 16 to display a contents status bar at a specific region of a moving picture screen according to a key input of the user so that the user may view a currently played state of the contents by one eye (S11).

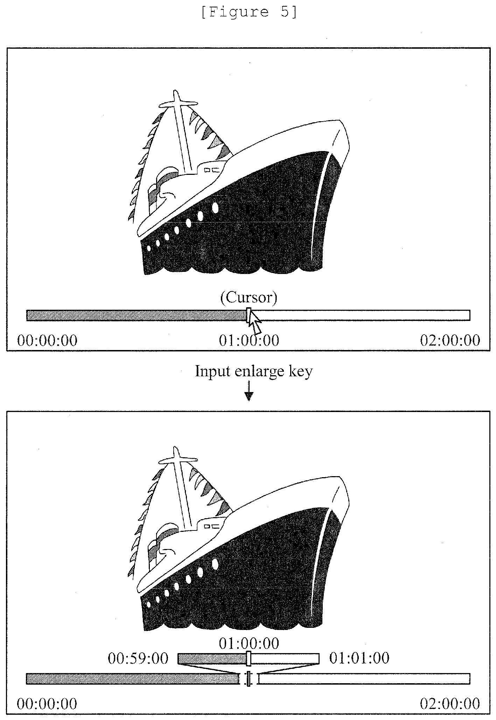

For example, as shown in FIG. 5, a status bar having a long bar shape is horizontally displayed at a bottom end of a played moving picture screen. A start time (e.g., 00:00:00), an end time (e.g., 02:00:00), a marker representing a currently played position, and a played time (e.g., 01:00:00) may be displayed at the status bar.

The user may operate the remote controller to align a cursor at a predetermined position of the status bar displayed above, and as illustrated with reference to FIG. 3, may input an enlarge key included in the remote controller.

In this manner, if the enlarge key of the remote controller is input (S12), the controller 15 confirms a position at which a cursor is displayed (S13), and controls the graphic generator 16 to enlarge a partial section including a current position of the cursor (S14).

For example, as shown in FIG. 5, if the enlarge key is input in a state that the current position of the cursor is a 01:00:00 position of the status bar, the controller 15 partially enlarges 00:59:00 ∼ 01:01:00 which is a partial section before/after 1 minute unit based on a 01:00:00 position, which is continuously connected to the status bar not to overlap with the status bar.

That is, since the user may minutely designate a desired position by partially enlarging a partial section including a cursor position and a partially enlarged partial section is displayed not to overlap with other sections, the user may easily select remaining sections in a state that the partial section is partially enlarged.

Further, the partially enlarged section is continuously displayed without disconnected from an original status bar to prevent a plurality of status bars from being displayed in a moving picture screen, thereby efficiently preventing a display region of a moving picture from be shielded by a plurality of status bars.

Since the displayed area of unselected sections should be reduced and only the displayed area of the selected section is enlarged in order to display the enlarged section on the status bar, it is difficult to exactly select a desired position in the reduced section while playing the enlarged section. Further, since the selected section is in an enlarged manner displayed but the unselected section is in a reduced manner displayed, it is difficult to intuitively determine which position of the contents is a currently played position.

Accordingly, in the present invention, the unselected section is displayed on the status bar at an original ratio and a section selected by the user is displayed at a position separated from a displayed position of the status bar to be connected to the status bar without disconnection.

Instead of combining a front section and arear section having the same length based on a current position of the cursor and enlarging the combined sections, the section may be enlarged by differently setting a length of a previous section before a current position of the cursor and a length of a next section after the current position of the cursor. For example, the section may be enlarged from a position 30 seconds before the position of the current cursor to a position 1 minute and 30 seconds after the position of the current cursor. In a contrary case, it is possible to lengthen a previous section and to shorten a next section.

The user may enlarge and display a section between two selected positions by simultaneously (at similar time) touching two points on the status bar and maintaining the touch for a predetermined time instead of enlarging and displaying a partial section including a selected position by touching one position (cursor position or touch position). Since the input may be similar to input with respect to repeated playback of the section, if two positions of the status bar are simultaneously selected, the controller 150 controls the graphic generator 16 to display a message inquiring whether the user wants repeated playback with respect to a section between the two selected positions or enlarging and displaying the section so that the user may select a desired operation.

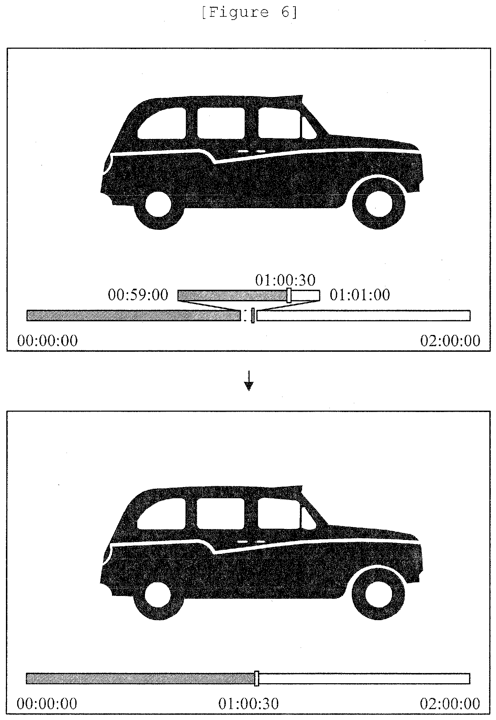

As described above, when the user selects a desired position from a partially enlarged section (S15), for example, as illustrated in FIG. 6, the controller 15 controls the player 13 such that the current position is jumped to a playback position corresponding to a position (for example, 01:00:30) selected by the user, to perform a playback operation (S16).

The controller 15 displays, on the status bar, a played position displayed through a marker in the enlarged section so that the user may intuitively recognize which position of the whole section of the contents is a currently played position.

In a where a predetermined position is selected from the enlarged section, when a currently played position passes through the partially enlarged section or a partial enlarge display release is requested by the user (S17), the controller 16 controls the graphic generator 16 to release an enlarge display state and horizontally display a status bar having a long bar shape (S18). When the currently played position passes through the partially enlarged section, the controller 15 may again and automatically enlarge and display a next section so that the user may designate a minute position.

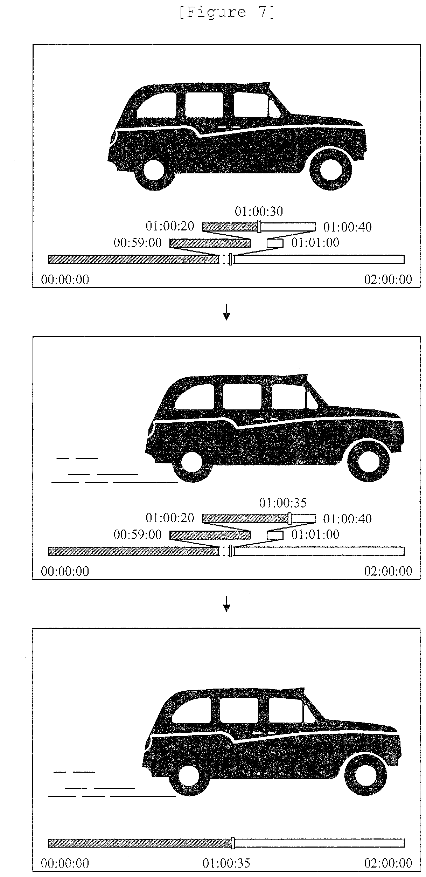

Further, as shown in FIG. 7, when the user again inputs an enlarge key of the remote controller in a state that a partial section is partially enlarged, the controller 16 confirms a current position of the cursor and again perform an operation of partially enlarging a partial section including a cursor position so that a partial enlarge operation of multi-stages may be continuously performed.

Further, a length of the partially enlarged section may be previously set in minute unit or second unit according to selection of the user. For example, in a case of one partial enlargement, the section is enlarged in units before/after 1 minute based on a reference point. In a case of two continuously partial enlargements, the section is enlarged in units before/after 10 seconds based on a reference point.

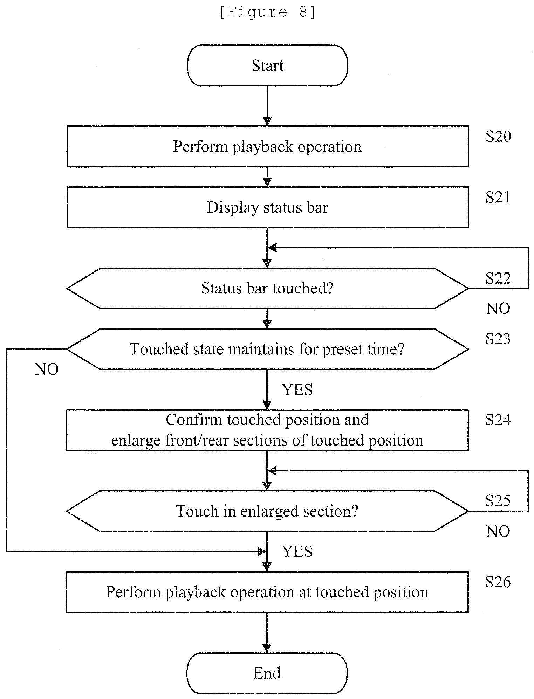

FIG. 8 is a flowchart illustrating a method of displaying a status bar according to another embodiment of the present invention.

For example, when a playback device according to the present invention is a smart phone including a touch screen, that is, when some of the input unit 17 is coupled with the display 18, the controller 15 may control the player 13 to perform a series of playback operations of plying moving picture data stored in the memory 12 (S20).

Next, the controller 15 controls the graphic generator 16 to display a status bar at a specific region of a moving picture screen so that the user may view a current played state by one eye (S21).

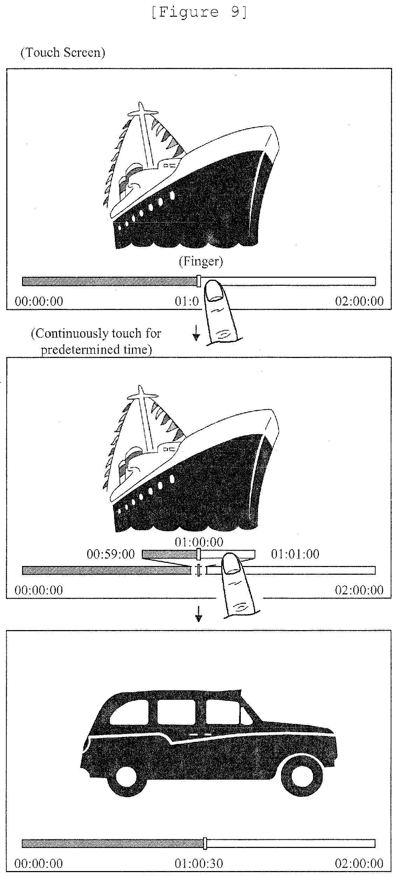

For example, as shown in FIG. 9, a status bar having a bar shape is displayed at a bottom end of a window with a played moving picture screen. A start time (e.g., 00:00:00), an end time (e.g., 02:00:00), a marker representing a currently played position, and a played time (e.g., 01:00:00) may be displayed at the status bar.

When the user touches a predetermined position of the status bar by a finger (S22) and maintains a touched state for a preset time (e.g., 1 second) (S23), the controller 15 confirms a touched position and controls the graphic generator 16 to partially enlarge a partial section of a currently touched position (324).

When the user touches a desired position in the partially enlarged section as illustrated above (S25), the controller 15 controls the player 13 to move a cursor to a position corresponding to a position (e.g., 01:00:30) touched by the user so that a playback operation is performed (S26).

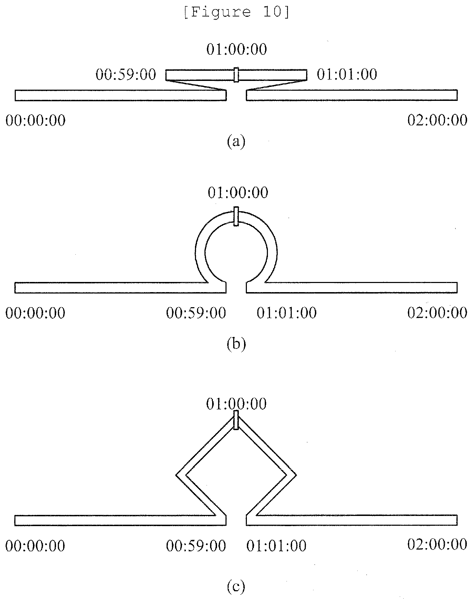

As described above, the partially enlarged section of the status bar may be displayed to have various shapes. For example, as shown in FIG. 10, the partially enlarged section is continuously displayed without disconnection from the original status bar not to overlap with the status bar, and may have a bar shape, a circular bar shape or a polygonal shape such as a triangular shape, a rectangular shape, etc.

Meanwhile, in order to avoid a complicate procedure of again enlarging the enlarged section for minutely selecting a partial section in a selected and enlarged section from the status bar, if the user touches an arbitrary position on the status bar, and drags the status bar from the touched position in a direction different from a direction in which a marker on the status bar moves, for example, vertically, a section including the touched position is displayed at a position separated from the status bar so that an enlarged size of a selected section may be proportional to a vertical distance to a position where a drag operation from the status bar is terminated.

That is, in order to minutely play an arbitrary position in a section including a touched position on a status bar, if the user drags the touch from the touched position on the status bar to a position away from the status bar, a selected section is greatly enlarged and displayed. If the user drags the touch to a position close to the touched status bar, the selected section may be less enlarged and displayed.

## Claims

1. A method of displaying a status bar, the method comprising:
displaying a status bar indicating a played state of contents; and
enlarging a section including a selected position and displaying the enlarged section at a position separated from the status bar when a predetermined position is selected from the status bar,
**characterized in that** the displaying of the enlarged section comprises enlarging the section proportional to a distance to a terminated position of a drag from the status bar and displaying the enlarged section when a touch is dragged from the predetermined position of the status bar in a direction other than an advance direction of the status bar in the predetermined position of the status bar.

2. The method of claim 1, wherein the displaying of the enlarged section comprises enlarging a front section and a rear section spaced from the selected position by a same interval to display the enlarged front/rear sections in a combined manner.

3. The method of claim 1, wherein the displaying of the enlarged section comprises enlarging and displaying a section where a rear section of the selected position is set to be longer than a front section of the selected position.

4. The method of any one of proceeding claims, further comprising enlarging a second section including a second position to display the enlarged second section at a position separated from the status bar and the enlarged section when the second position is selected from the displayed enlarged section.

5. The method of any one of proceeding claims, wherein the displaying of the enlarged section comprises displaying a currently played position at the enlarge section and the status bar.

6. The method of any one of proceeding claims, wherein the displaying of the enlarged section comprises displaying the enlarged section having a straight bar shape, a circular bar shape, or a polygonal bar shape.

7. A contents playback device comprising:
an input unit (17) for receiving a command of a user;
a player (13) for playing contents;
a graphic generator (16) for generating a graphic including a status bar indicating a played position of the contents played by the player (13); and
a controller (15) configured to control the graphic generator (16) to enlarge a section including a selected position and to display the enlarged section at a position separated from the status bar when a predetermined position is selected from the status bar through the input unit (17),
**characterized in that** the controller (15) controls the graphic generator (16) to enlarge the section proportional to a distance to a terminated position of a drag from the status bar and displaying the enlarged section when a touch is dragged from the predetermined position of the status bar in a direction other than an advance direction of the status bar in the predetermined position of the status bar by the input unit (17).

8. The contents playback device of claim 7, wherein the controller (15) controls the graphic generator (16) to enlarge a second section including a second position and to display the enlarged second section at a position separated from the status bar and the enlarged section when the second position is selected from the displayed enlarged section by the input unit (17).

9. The contents playback device of claim 7 or 8, wherein the controller (15) controls the graphic generator (16) to display a currently played position at the enlarge section and the status bar.

10. The contents playback device of any of claims 7 to 9, wherein the controller (15) controls the graphic generator (16) to enlarge a front section and a rear section spaced from the selected position by a same interval to display the enlarged front/rear sections in a combined manner.

11. The contents playback device of any of claims 7 to 9, wherein the controller (15) controls the graphic generator (16) to enlarge and display a section where a rear section of the selected position is longer than a front section of the selected position.

12. The contents playback device of any of claims 7 to 11, wherein the controller (15) controls the graphic generator (16) to display the enlarged section having a straight bar shape, a circular bar shape, or a polygonal bar shape.

## Patentansprüche

1. Verfahren zum Anzeigen einer Statuszeile, wobei das Verfahren umfasst:
Anzeigen einer Statuszeile, die einen Abspielzustand von Inhalten angibt; und
Vergrößern eines Abschnitts, der eine ausgewählte Position umfasst, und Anzeigen des vergrößerten Abschnitts an einer von der Statuszeile getrennten Position, wenn eine vorgegebene Position von der Statuszeile ausgewählt wird,
**dadurch gekennzeichnet, dass** das Anzeigen des vergrößerten Abschnitts ein Vergrößern des Abschnitts proportional zu einem Abstand zu einer Endposition eines Ziehens von der Statuszeile und ein Anzeigen des vergrößerten Abschnitts umfasst, wenn ein Touch von der vorgegebenen Position der Statuszeile in eine andere Richtung als eine Vorwärtsrichtung der Statuszeile in der vorgegebenen Position der Statuszeile gezogen wird.

2. Verfahren nach Anspruch 1, wobei das Anzeigen des vergrößerten Abschnitts ein Vergrößern eines vorderen Abschnitts und eines hinteren Abschnitts umfasst, die von der ausgewählten Position durch ein gleiches Intervall beabstandet sind, um die vergrößerten vorderen/hinteren Abschnitte in kombinierter Weise anzuzeigen.

3. Verfahren nach Anspruch 1, wobei das Anzeigen des vergrößerten Abschnitts ein Vergrößern und Anzeigen eines Abschnitts umfasst, wobei ein hinterer Abschnitt der ausgewählten Position so eingestellt ist, dass er länger als ein vorderer Abschnitt der ausgewählten Position ist.

4. Verfahren nach einem der vorhergehenden Ansprüche, ferner umfassend ein Vergrößern eines zweiten Abschnitts, der eine zweite Position umfasst, um den vergrößerten zweiten Abschnitt an einer Position anzuzeigen, die von der Statuszeile und dem vergrößerten Abschnitt getrennt ist, wenn die zweite Position von dem angezeigten vergrößerten Abschnitt ausgewählt wird.

5. Verfahren nach einem der vorhergehenden Ansprüche, wobei das Anzeigen des vergrößerten Abschnitts ein Anzeigen einer aktuell abgespielten Position an dem vergrößerten Bereich und der Statuszeile umfasst.

6. Verfahren nach einem der vorhergehenden Ansprüche, wobei das Anzeigen des vergrößerten Abschnitts ein Anzeigen des vergrößerten Abschnitts in Form eines geraden Balkens, eines kreisförmigen Balkens oder eines polygonalen Balkens umfasst.

7. Vorrichtung zum Abspielen von Inhalten umfassend:
eine Eingabeeinheit (17) zum Empfangen eines Befehls eines Benutzers;
einen Player (13) zum Abspielen von Inhalten;
einen Grafikgenerator (16) zum Erzeugen einer Grafik, die eine Statuszeile umfasst, die einen Abspielzustand von durch den Player (13) abgespielten Inhalten angibt; und
eine Steuereinrichtung (15), die dazu konfiguriert ist, den Grafikgenerator (16) dazu zu steuern, einen Abschnitt zu vergrößern, der eine ausgewählte Position umfasst, und den vergrößerten Abschnitt an einer von der Statuszeile getrennten Position anzuzeigen, wenn durch die Eingabeeinheit (17) eine vorgegebene Position von der Statuszeile ausgewählt wird,
**dadurch gekennzeichnet, dass** die Steuereinrichtung (15) den Grafikgenerator (16) dazu steuert, den Abschnitt proportional zu einem Abstand zu einer Endposition eines Ziehens von der Statuszeile zu vergrößern und den vergrößerten Abschnitts anzuzeigen, wenn durch die Eingabeeinheit (17) ein Touch von der vorgegebenen Position der Statuszeile in eine andere Richtung als eine Vorwärtsrichtung der Statuszeile in der vorgegebenen Position der Statuszeile gezogen wird.

8. Vorrichtung zum Abspielen von Inhalten nach Anspruch 7, wobei die Steuereinrichtung (15) den Grafikgenerator (16) dazu steuert, einen zweiten Abschnitt zu vergrößern, der eine zweite Position umfasst, und den vergrößerten zweiten Abschnitt an einer Position anzuzeigen, die von der Statuszeile und dem vergrößerten Abschnitt getrennt ist, wenn die zweite Position von dem angezeigten vergrößerten Abschnitt durch die Eingabeeinheit (17) ausgewählt wird.

9. Vorrichtung zum Abspielen von Inhalten nach Anspruch 7 oder 8, wobei die Steuereinrichtung (15) den Grafikgenerator (16) dazu steuert, eine aktuell abgespielte Position an dem vergrößerten Bereich und der Statuszeile anzuzeigen.

10. Vorrichtung zum Abspielen von Inhalten nach einem der Ansprüche 7 bis 9, wobei die Steuereinrichtung (15) den Grafikgenerator (16) dazu steuert, einen vorderen Abschnitt und einen hinteren Abschnitt zu vergrößern, die von der ausgewählten Position durch ein gleiches Intervall beabstandet sind, um die vergrößerten vorderen/hinteren Abschnitte in kombinierter Weise anzuzeigen.

11. Vorrichtung zum Abspielen von Inhalten nach einem der Ansprüche 7 bis 9, wobei die Steuereinrichtung (15) den Grafikgenerator (16) dazu steuert, einen Abschnitt zu vergrößern und anzuzeigen, wobei ein hinterer Abschnitt der ausgewählten Position länger als ein vorderer Abschnitt der ausgewählten Position ist.

12. Vorrichtung zum Abspielen von Inhalten nach einem der Ansprüche 7 bis 11, wobei die Steuereinrichtung (15) den Grafikgenerator (16) dazu steuert, den vergrößerten Abschnitt in Form eines geraden Balkens, eines kreisförmigen Balkens oder eines polygonalen Balkens anzuzeigen.

## Revendications

1. Méthode d'affichage d'une barre d'état, la méthode comprenant :
- afficher une barre d'état indiquant un état des contenus lus, et
- agrandir une section incluant une position choisie et afficher la section agrandie au niveau d'une position séparée de la barre d'état quand une position prédéterminée est choisie dans la barre d'état,
- **caractérisée en ce que** l'affichage de la section agrandie comprend d'agrandir la section proportionnellement à une distance jusqu'à une position de fin de déplacement de la barre d'état et d'afficher la section agrandie quand une touche est déplacée à partir de la position prédéterminée de la barre d'état dans une direction autre qu'une direction d'avancée de la barre d'état dans la position prédéterminée de la barre d'état.

2. Méthode selon la revendication 1, **caractérisée en ce que** l'affichage de la section agrandie comprend d'agrandir une section avant et une section arrière séparées de la position choisie par un même intervalle pour afficher les sections avant/arrière agrandies de manière combinée.

3. Méthode selon la revendication 1, **caractérisée en ce que** l'affichage de la section agrandie comprend d'agrandir et d'afficher une section où une section arrière de la position choisie est réglée pour être plus longue qu'une section avant de la position choisie.

4. Méthode selon l'une quelconque des revendications précédentes, comprenant en outre d'agrandir une deuxième section incluant une deuxième position pour afficher la deuxième section agrandie au niveau d'une position séparée de la barre d'état et de la section agrandie quand la deuxième position est choisie dans la section agrandie affichée.

5. Méthode selon l'une quelconque des revendications précédentes, **caractérisée en ce que** l'affichage de la section agrandie comprend l'affichage d'une position en cours de lecture au niveau de la section agrandie et de la barre d'état.

6. Méthode selon l'une quelconque des revendications précédentes, **caractérisée en ce que** l'affichage de la section agrandie comprend l'affichage de la section agrandie présentant la forme d'une barre droite, d'une barre circulaire ou d'une barre polygonale.

7. Dispositif de lecture de contenus comprenant :
- une unité de saisie (17) pour recevoir une commande d'un utilisateur,
- un lecteur (13) pour lire des contenus,
- un générateur graphique (16), pour générer un graphique comprenant une barre d'état indiquant une position lue des contenus lus par le lecteur (13), et
- un contrôleur (15) configuré pour contrôler le générateur graphique (16) pour agrandir une section incluant une position choisie et pour afficher la section agrandie au niveau d'une position séparée de la barre d'état quand une position prédéterminée est choisie dans la barre d'état via l'unité de saisie (17),
- **caractérisé en ce que** le contrôleur (15) contrôle le générateur graphique (16) pour agrandir la section proportionnelle à une distance à une position terminée d'un déplacement de la barre d'état et afficher la section agrandie quand une touche est déplacée de la position prédéterminée de la barre d'état dans une direction autre qu'une direction d'avancée de la barre d'état dans la position prédéterminée de la barre d'état par l'unité de saisie (17).

8. Dispositif de lecture de contenus selon la revendication 7, **caractérisé en ce que** le contrôleur (15) contrôle le générateur graphique (16) pour agrandir une deuxième section incluant une deuxième position et pour afficher la deuxième section agrandie au niveau d'une position séparée de la barre d'état et la section agrandie quand la deuxième position est choisie depuis la section agrandie affichée par l'unité de saisie (17).

9. Dispositif de lecture de contenus selon la revendication 7 ou 8, **caractérisé en ce que** le contrôleur (15) contrôle le générateur graphique (16) pour afficher une position en cours de lecture au niveau de la section agrandie et de la barre d'état.

10. Dispositif de lecture de contenus selon l'une quelconque des revendications 7 à 9, **caractérisé en ce que** le contrôleur (15) contrôle le générateur graphique (16) pour agrandir une section avant et une section arrière séparées de la position choisie par un même intervalle pour afficher les sections avant/arrière agrandies de manière combinée.

11. Dispositif de lecture de contenus selon l'une quelconque des revendications 7 à 9, **caractérisé en ce que** le contrôleur (15) contrôle le générateur graphique (16) pour agrandir et afficher une section où une section arrière de la position choisie est plus longue qu'une section avant de la position choisie.

12. Dispositif de lecture de contenus selon l'une quelconque des revendications 7 à 11, **caractérisé en ce que** le contrôleur (15) contrôle le générateur graphique (16) pour afficher la section agrandie présentant la forme d'une barre droite, d'une barre circulaire ou d'une barre polygonale.
